# EUROPEAN PATENT APPLICATION

(11) **EP 3 822 579 A1**
(43) Date of publication of application: **19.05.2021**
(21) Application number: 19833682.8
(22) Date of filing: 08.03.2019
(51) Int. Cl.: G01B 11/25

(54) **THREE-DIMENSIONAL MEASUREMENT DEVICE AND METHOD**

(30) Priority: 09.07.2018 JP 2018130077
(71) Applicant: OMRON Corporation, Shiokoji-dori, Shimogyo-ku, Kyoto-shi Kyoto 600-8530 (JP)
(72) Inventor: FU, Xingdou, Kyoto 619-0283 (JP); MIAO, Lin, Kyoto 619-0283 (JP)
(74) Representative: Horn Kleimann Waitzhofer Patentanwälte PartG mbB
(86) International application number: PCT/JP2019/009289
(87) International publication number: WO 2020/012707

(57) **Abstract**

Deterioration in operability and processing efficiency is prevented, while improving measurement accuracy of a three-dimensional shape of a measurement object. A three-dimensional measurement apparatus includes: a light-projecting and image-capturing part including at least a first unit including a first light projection part configured to project a first patterned light onto a measurement object and a first image capturing part configured to capture an image of the measurement object from a first image capturing direction, and a second unit including a second light projection part configured to project a second patterned light onto the measurement object and a second image capturing part configured to capture an image of the measurement object from a second image capturing direction; and a calculation part configured to calculate three-dimensional positions of target pixels based on a predetermined pattern in the captured images of the measurement object and the predetermined pattern that is stored. The light-projecting and image-capturing part projects the first patterned light and the second patterned light individually onto the measurement object, and captures images of the measurement object, onto which the first patterned light and the second patterned light are individually projected, with the first image capturing part and the second image capturing part.

## Description

### TECHNICAL FIELD

The present invention relates to a three-dimensional measurement apparatus and method for measuring a three-dimensional shape of a measurement object.

### BACKGROUND ART

Conventionally, various methods for measuring a three-dimensional shape of a measurement object (such as a workpiece) are known. These methods are roughly classified into methods using the straightness of light and methods using the speed of light, by focusing on the properties of light. The methods using the straightness of light include methods that can be classified into either active measurements or passive measurements. On the other hand, the methods using the speed of light includes methods that can be classified as active measurements.

As an example of an active measurement method, for example, a method using a so-called active one-shot method is known in which capturing an image is performed in a state in which a patterned light including a spatially encoded (coded) pattern (structured light pattern) is projected onto a measurement object, and the three-dimensional shape of the measurement object is specified from a position of the pattern on the captured image. Such an active one-shot method has the advantages of high measurement accuracy particularly at short distances, wide field of view, and low cost.

As another method using the active one-shot method, Patent Document 1 discloses a three-dimensional measurement apparatus that includes one light projecting means for projecting a patterned light onto a measurement object and three or more image capturing means for capturing images of the measurement object onto which the patterned light is projected from different directions. This three-dimensional measurement apparatus is intended to more appropriately measure a three-dimensional shape of a measurement object having a strong specular reflection component, by integrating a plurality of pieces of three-dimensional point group data obtained from a plurality of captured images.

### RELATED ART DOCUMENT

### PATENT DOCUMENT

Patent Document 1: JP 5633058A

### SUMMARY OF THE INVENTION

### PROBLEM TO BE SOLVED BY THE INVENTION

In order to improve the measurement accuracy of the three-dimensional shape of the measurement object by the active one-shot method, it is effective to project patterned light onto the measurement object from a plurality of different positions to increase the number of captured images. This makes it possible to increase the amount of information that is obtained and to improve the reliability. For this purpose, for example, in the above-described conventional three-dimensional measurement apparatus (Patent Document 1) including one light projecting means and a plurality of image capturing means, it is conceivable to add a light projecting means such that the three-dimensional measurement apparatus includes a plurality of light projecting means.

However, in such an apparatus configuration including a plurality of light projecting means, if the patterned lights from the plurality of light projecting means are projected onto the measurement object at the same time, the patterned lights may overlap or interfere with each other, and the predetermined pattern may not be accurately determined. In addition, for example, in a case where a light projecting means is added to the existing configuration of the conventional three-dimensional measurement apparatus (Patent Document 1), it may be necessary to adjust the arrangement of the light projecting means and the capturing means. Accordingly, it is necessary to newly perform calibration between the light projecting means and the capturing means, which leads to a decrease in operability of the apparatus and an increase in processing time.

An advantage of some aspects of the invention is to provide a three-dimensional measurement apparatus and a three-dimensional measurement method capable of preventing deterioration of operability and processing efficiency, while improving measurement accuracy of a three-dimensional shape of a measurement object.

### MEANS FOR SOLVING THE PROBLEMS

In order to solve the above-described issues, the present invention adopts the following configuration.
(1) An example of a three-dimensional measurement apparatus according to the present disclosure is a three dimensional measurement apparatus configured to measure a three-dimensional shape of a measurement object, the three-dimensional measurement apparatus including: a light-projecting and image-capturing part including at least a first unit and a second unit, the first unit including a first light projection part configured to project a first patterned light including a predetermined pattern from a first projection direction onto the measurement object and a first image capturing part configured to capture an image of the measurement object from a first image capturing direction, and the second unit including a second light projection part configured to project a second patterned light including the predetermined pattern from a second projection direction onto the measurement object and a second image capturing part configured to capture an image of the measurement object from a second image capturing direction; a pattern storage part configured to store the predetermined pattern; and a calculation part configured to select target pixels from the captured images of the measurement object and calculate three-dimensional positions of the target pixels based on a predetermined pattern in the captured images and the predetermined pattern that is stored in the pattern storage part. The light-projecting and image-capturing part projects the first patterned light and the second patterned light individually onto the measurement object, and captures images of the measurement object, onto which the first patterned light and the second patterned light are individually projected, with the first image capturing part and the second image capturing part.
   Here, the "predetermined pattern" is not particularly limited, and various patterns used in a known active measurement method (for example, an active one-shot method) can be used. More specifically, examples of the predetermined pattern may include a so-called line-based pattern in which a plurality of lines are two-dimensionally arranged at a predetermined intervals, a so-called area-based pattern in which a plurality of types of mutually distinguishable unit images, unit figures, geometric shapes, and the like are two-dimensionally arranged (these images, figures, or shapes may also be arranged regularly or randomly, and the regularly-arranged portions and the randomly-arranged portions may also be mixed or superimposed), a so-called grid-graph-based pattern in which graph symbols or the like are arranged in a grid of vertical and horizontal lines, and the like. The predetermined pattern may also include ID information for identifying a line or a unit figure for encoding.
   Even when any predetermined pattern is used, corresponding points in a captured image can be specified by the epipolar constraint. However, when the area-based pattern is used, the corresponding points may also be specified by two-dimensional matching regardless of the epipolar constraint depending on the pattern. Furthermore, the predetermined pattern included in the first patterned light and the predetermined pattern included in the second patterned light may also be the same or different from each other.
   Hereinafter, the first and second light projection parts may be collectively referred to as a "light projection part", the first and second light projection directions may be collectively referred to as a "projection direction", the first and second image capturing parts may be collectively referred to as an "image capturing part", the first and second image capturing directions may be collectively referred to as an "image capturing direction", and the first and second units may be correctively referred to as a "unit". In these expressions, the introductory phrases "first" and "second" are expressions used for convenience to distinguish between light projection parts, projection directions, image capturing parts, image capturing directions, and units that are different from each other. Furthermore, the number of the light projection part and the image capturing part provided in each unit may also be one or more. Also, the light-projecting and image-capturing part may further include another "unit" that is different from the first and second units. In this case, the number of different "units" may be one or more, and may be conveniently expressed as, for example, "third unit", "fourth unit", or the like.
   In this configuration, the three-dimensional measurement by the active measurement method is performed by projecting the first patterned light and the second patterned light including a predetermined pattern from the light-projecting and image-capturing part to the measurement object from different projection directions, and obtaining the three-dimensional positions of the target pixels in the obtained captured images. At that time, images of the measurement object onto which the first patterned light is projected from the first projection direction are captured by the first image capturing part and the second image capturing part from the first image capturing direction and the second projection direction, which are different from each other, to obtain a plurality of captured images. Similarly, images of the measurement object onto which the second patterned light is projected from the second projection direction are captured by the first image capturing part and the second image capturing part to obtain a plurality of captured images.
   According to this configuration, it is possible to obtain captured images corresponding to the number of light projection parts × the number of image capturing parts (corresponding to the second power of the number of units). By using the plurality of captured images as appropriate, the amount of information on the three-dimensional shape of the measurement object can be increased. As a result, it is possible to increase the reliability of the three-dimensional position specified for the target pixels, and it is also possible to increase the robustness with respect to the surface shape of the measurement object and mutual reflection. Also, the first image capturing part and the second image capturing part capture images of the measurement object onto which the first patterned light and the second patterned light are individually projected. Accordingly, there is no possibility that the plurality of patterned lights overlap or interfere with each other, and it is possible to accurately determine the predetermined pattern in the captured images. Furthermore, the light projection part and the image capturing part are used as a unit. Accordingly, it is not necessary to calibrate a geometric positional relationship (coordinate system) between the light projection part and the image capturing part every time the light projection part is additionally provided.
(2) In the above configuration, more specifically, the light-projecting and image-capturing part may also simultaneously capture images of the measurement object, onto which the first patterned light is projected, with the first image capturing part and the second image capturing part, and simultaneously capture images of the measurement object, onto which the second patterned light is projected, with the first image capturing part and the second image capturing part. With this configuration, it is possible to more quickly capture images of the measurement object onto which the patterned lights are projected.
(3) In the above configuration, the calculation part may also generate a plurality of pieces of three-dimensional point group data representing the three-dimensional positions of the target pixels in each of the plurality of images captured by the first image capturing part and the second image capturing part, and combine (integrate) and refine the generated plurality of pieces of three-dimensional point group data. The refinement method is not particularly limited. For each target pixel, for example, a normal averaging operation or an appropriate weighted averaging operation may also be performed using the plurality of pieces of three-dimensional point group data, or appropriate numerical filtering processing may also be performed to select three-dimensional point group data to be used. With this configuration, the reliability of the three-dimensional positions of the target pixels can be further increased.
(4) In the above configuration, a geometric positional relationship between the first light projection part and the first image capturing part and a geometric positional relationship between the second light projection part and the second image capturing part may also be calibrated in advance. In this configuration, it is not necessary to calibrate the geometric positional relationship (coordinate system) between the light projection part and the image capturing part for each unit every time three-dimensional measurement is performed.
(5) In the above configuration, the three-dimensional measurement apparatus may also further include a calibration part configured to calibrate a geometric positional relationship between the first light projection part and the second image capturing part and a geometric positional relationship between the second light projection part and the first image capturing part. In this configuration, the geometric positional relationship between the light projection part and the image capturing part of different units is calibrated. Accordingly, even when the relative arrangement of the units is appropriately changed, it is possible to perform appropriate three-dimensional measurement, and it is possible to increase the versatility of the apparatus configuration and the three-dimensional measurement.
(6) In the above configuration, examples of a method for calibrating the geometric positional relationship between the light projection part and the image capturing part of different units include the following methods. The first image capturing part and the second image capturing part may capture images of a predetermined calibration reference object, and the calibration part may also calibrate a geometric positional relationship between the first image capturing part and the second image capturing part based on the captured images of the reference pattern, and may also calibrate the geometric positional relationship between the first light projection part and the second image capturing part and the geometric positional relationship between the second light projection part and the first image capturing part based on the calibrated geometric positional relationship between the first image capturing part and the second image capturing part, and the geometric positional relationship, which has been calibrated in advance, between the first light projection part and the first image capturing part and the geometric positional relationship, which has been calibrated in advance, between the second light projection part and the second image capturing part.
   Here, the "predetermined calibration reference object" is not particularly limited, and a calibration reference object usually used for calibration of the light projection part or the image capturing part of the three-dimensional measurement apparatus can be used. Examples of the "predetermined calibration reference object" include a stereoscopic calibration reference object or a planar calibration reference object on which a predetermined code, a checker (which may be monochrome, grayscale, or color), or an appropriate pattern is printed or projected.
   In this configuration, the geometric positional relationship between the image capturing parts in the different units is calibrated based on the result of capturing images of the predetermined calibration reference object by the different image capturing parts. Therefore, if the geometric positional relationship between the light projection part and the image capturing part of each unit is known, the geometric positional relationship between the light projection part and the image capturing part between the different units can be easily calibrated.
(7) In the above configuration, the three-dimensional measurement apparatus may also include a projecting part configured to project a normal illumination light, which is different from the first patterned light and the second patterned light, onto the measurement object. In this configuration, a normal illumination light that is different from the patterned light (measurement light) for three-dimensional measurement can be used as, for example, ordinary illumination for inspection. Accordingly, even when the measurement object is in a dark surrounding environment, three-dimensional measurement can be suitably performed. In addition, the three-dimensional shape of the measurement object can be more accurately specified by comparing images obtained by capturing the measurement object onto which the normal illumination light is projected with shape design data (CAD model data) of the measurement object that is set or stored in advance, and performing, for example, so-called CAD matching.
(8) In the above configuration, the three-dimensional measurement apparatus may also include a projecting part configured to project a normal illumination light, which is different from the first patterned light and the second patterned light, onto the predetermined calibration reference object. In this configuration, for example, even in a case where the calibration reference object is in the dark surrounding environment, it is possible to suitably capturing an image of the calibration reference object.
(9) An example of a three dimensional measurement method according to the present disclosure is a method that can effectively implemented by using an example of a three-dimensional measurement apparatus including: a light-projecting and image-capturing part including at least a first unit including a first light projection part and a first image capturing part and a second unit including a second light projection part and a second image capturing part; a pattern storage part; and a calculation part, and the method includes the following steps.
   The method includes: a light-projecting and image-capturing step including at least a step of the first light projection part projecting a first patterned light including a predetermined pattern from a first projection direction onto the measurement object, a step of the second light projection part projecting a second patterned light including the predetermined pattern from a second projection direction onto the measurement object, a step of the first image capturing part capturing an image of the measurement object from a first image capturing direction, and a step of the second image capturing part capturing an image of the measurement object from a second image capturing direction; a storage step of the pattern storage part storing the predetermined pattern; and a calculation step of the calculation part selecting target pixels from the captured images of the measurement object and calculating three-dimensional positions of the target pixels based on the predetermined pattern in the captured images and the predetermined pattern stored in the pattern storage part. In the light-projecting and image-capturing step, images of the measurement object, onto which the first patterned light and the second patterned light are individually projected, are captured by the first image capturing part and the second image capturing part.

In the present disclosure, a "part" and an "apparatus" do not simply mean physical means, and include a configuration in which functions of the "part" and the "apparatus" are realized by software. The function of one "part" or one "apparatus" may also be realized by two or more physical means or apparatuses, or the functions of two or more "parts" and "apparatuses" may also be realized by one physical means or apparatus. Furthermore, the terms "part" and "apparatus" are concepts that can be rephrased as, for example, "means" and "system".

### EFFECTS OF THE INVENTION

According to the present invention, in three-dimensional measurement of a measurement object, a plurality of different captured images can be efficiently and suitably obtained, the reliability of the three-dimensional positions of target pixels can be increased by increasing the amount of information of the three-dimensional shape of the measurement object, and calibration of the apparatus can be easily performed. As a result, it is possible to improve the measurement accuracy of the three-dimensional shape of the measurement object, and prevent deterioration of operability and processing efficiency.

### BRIEF DESCRIPTION OF THE DRAWINGS

- Fig. 1: is a plan view schematically showing an example of an application scene of a three-dimensional measurement apparatus according to an embodiment.
- Fig. 2: is a plan view schematically showing an example of a hardware configuration of the three-dimensional measurement apparatus according to the embodiment.
- Fig. 3: is a plan view schematically showing an example of a functional configuration of the three-dimensional measurement apparatus according to the embodiment.
- Fig. 4: is a flowchart showing an example of a processing procedure in the three-dimensional measurement apparatus according to the embodiment.
- Fig. 5: is a plan view schematically showing an example of a state in which calibration is performed as preprocessing in the three-dimensional measurement apparatus according to the embodiment.
- Fig. 6: is a plan view schematically showing an example of a state in which projection of patterned lights onto a measurement object and image capturing of the measurement object are performed by the three-dimensional measurement apparatus according to the embodiment.
- Fig. 7: is a plan view schematically showing an example of a state in which projection of patterned lights onto a measurement object and image capturing of the measurement object are performed by the three-dimensional measurement apparatus according to the embodiment.
- Fig. 8: is a plan view schematically showing an example of a state in which projection of patterned lights onto a measurement object and image capturing of the measurement object are performed by the three-dimensional measurement apparatus according to the embodiment.
- Figs. 9: (A) and (B) are perspective views schematically showing a first configuration example and a second configuration example of a unit Ui according to a first modification.

### EMBODIMENTS OF THE INVENTION

Hereinafter, an embodiment according to an example of the present disclosure (hereinafter, referred to as an "embodiment") will be described with reference to the drawings. However, the embodiment described below is merely an example, and is not intended to exclude application of various modifications and techniques not explicitly described below. That is to say, the example of the present disclosure can be variously modified and implemented without departing from the sprit thereof. In addition, in the following description of the drawings, the same or similar portions are denoted by the same or similar reference numerals, and the drawings are schematic and do not necessarily correspond to actual dimensions, ratios, and the like. Furthermore, the drawings may include portions having different dimensional relationships and ratios.

### 1. Application Example

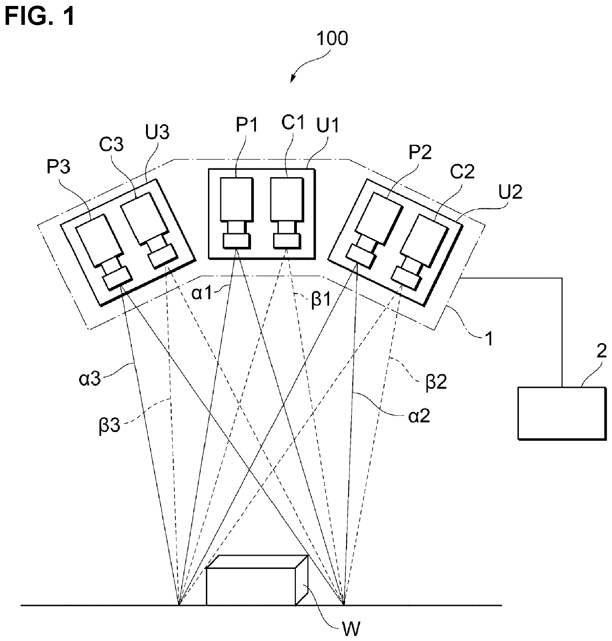

First, an example of a scene to which an example of the present disclosure is applied will be described with reference to Fig. 1. Fig. 1 is a plan view schematically showing an example of an application scene of a three-dimensional measurement apparatus 100 according to an embodiment. The three-dimensional measurement apparatus 100 according to the present embodiment includes a light-projecting and image-capturing apparatus 1 including units U1 to U3, and a control apparatus 2 that is connected to the light-projecting and image-capturing apparatus 1. The units U1 to U3 in the light-projecting and image-capturing apparatus 1 are arranged to face a measurement object W. The units U1 to U3 respectively include a projector P1 and a camera C1, a projector P2 and a camera C2, and a projector P3 and a camera C3, which are arranged side by side. Although Fig. 1 shows an example in which the projectors P1 to P3 and cameras C1 to C3 are integrally configured, the projectors P1 to P3 and the cameras C1 to C3 do not have to be integrally configured and may also be separately provided.

The projectors P1 to P3 in the units U1 to U3 are 3D illumination that projects a patterned light (a measurement light) including a predetermined pattern for performing three-dimensional measurement of the measurement object W onto the measurement object W in the projection areas α1 to α3. There is no particular limitation to the configuration of the projectors P1 to P3, and for example, a configuration including a laser light source, a pattern mask, and a lens can be given as an example. Light emitted from the laser light source is converted into a patterned light including a predetermined pattern by the pattern mask on which the predetermined pattern is formed, and is projected onto the measurement object W via the lens.

The cameras C1 to C3 in the units U1 to U3 include, for example, camera devices on which ordinary optical sensors are mounted. The cameras C1 to C3 capture images of the measurement object W onto which the patterned lights are projected in image capturing areas β1 to β3 (viewing angles). As described above, the three-dimensional measurement apparatus 100 performs three-dimensional measurement of the measurement object W by the active one-shot method.

In the present embodiment, the geometric positional relationship (projection coordinate system and image capturing coordinate system) between the projector P1 and the camera C1 in the unit U1 is calibrated in advance prior to the operation of the three-dimensional measurement apparatus 100. Similarly, the geometric positional relationship between the projector P2 and the camera C2 in the unit U2 and the geometric positional relationship between the projector P3 and the camera C3 in the unit U3 are also calibrated in advance.

The control apparatus 2 controls the projection processing of the patterned lights onto the measurement object W by the projectors P1 to P3, and the image capturing processing by the cameras C1 to C3, and performs various kinds of processing including image processing of the captured images of the measurement object W. As the image processing, first, for each captured image, a three-dimensional point group indicating three-dimensional positions of a plurality of target pixels corresponding to the predetermined pattern included in the projected patterned light is restored. Then, if necessary, a plurality of obtained three-dimensional point group data are combined and refined, and the three-dimensional shape of the measurement object W is specified from the finally obtained three-dimensional point group data.

For the creation of the predetermined pattern and the calculation processing of the three-dimensional point group data in the three-dimensional measurement of the measurement object W by the active one-shot method, it is possible to adopt a known or predetermined method. The three-dimensional measurement method disclosed in JP 2017-211840A by the present applicant (the "pattern" disclosed in the description of that method is an example of the above-described area-based pattern) can be cited as a preferable example, for example.

As described above, the light-projecting and image-capturing apparatus 1 corresponds to an example of a "light-projecting and image-capturing part" in the present invention. The projectors P1 to P3 are examples of a "light projection part" in the present invention (a portion of the projectors P1 to P3 is a "first light projection part", and the remaining portion is a "second light projection part"). Furthermore, the cameras C1 to C3 are examples of an "image capturing part" in the present invention (a portion of the cameras C1 to C3 is a "first image capturing part", and the remaining portion is a "second image capturing part"). The units U1 to U3 are examples of a "unit" in the present invention (a portion of the units U1 to U3 is a "first unit", and the remaining portion is a "second unit"). Furthermore, the patterned light projected from the projectors P1 to P3 is an example of a "patterned light" in the present invention (a portion of the patterned light projected from the projectors P1 to P3 is a "first patterned light", and the remaining portion is a "second patterned light").

The direction from the projectors P1 to P3 toward the projection areas α1 to α3 is an example of a "projection direction" in the present invention (a portion of the direction of the projection areas α1 to α3 is a "first projection direction", and the remaining portion is a "second projection direction"). Furthermore, the direction from the cameras C1 to C3 toward the image capturing areas β1 to β3 is an example of an "image capturing direction" in the present invention (a portion of the direction of the image capturing areas β1 to β3 is a "first image capturing direction", and the remaining portion is a "second image capturing direction").

As described above, in the present embodiment, three-dimensional measurement of the measurement object W can be performed by the active one-shot method using the plurality of units U1 to U3. In addition, as will be described later, in a state in which a patterned light is projected onto the measurement object W from the projector P1 of the unit U1, images of the measurement object W are captured by all the cameras C1 to C3 of all the units U1 to U3. Then, in the same manner, projection of the patterned lights by the projectors P2 and P3 and image capturing by all the cameras C1 to C3 are performed.

With this configuration, in the present embodiment, it is possible to obtain a total of nine captured images (corresponding to the second power of the number of units U1 to U3), namely the number (three) of the projectors P1 to P3 × the number (three) of cameras C1 to C3. The three images captured by the cameras C1 to C3 obtained at the time of projection by the projectors P1 to P3 are images of the measurement object W captured from different image capturing directions. Furthermore, the three images captured by the same cameras C1 to C3 obtained at the time of projection by the projectors P1 to P3 have different projection directions of the patterned light onto the measurement object W.

Accordingly, by using the plurality of captured images, the amount of information on the three-dimensional shape of the measurement object W can be increased. As a result, it is possible to increase the reliability of the three-dimensional positions calculated for the target pixels, and it is also possible to increase the robustness (prevention of halation or the like) with respect to the surface shape and the mutual reflection of the measurement object W. Accordingly, the measurement accuracy of the three-dimensional shape of the measurement object W can be improved. The term "halation" refers to a state in which the tone of an excessively bright portion of a captured image is lost and the image becomes white, and is also referred to as "blown-out highlights" or "light halos".

In the present embodiment, images of the measurement object W onto which the patterned lights from the projectors P1 to P3 are individually projected are captured by the cameras C1 to C3. Accordingly, there is no possibility that the plurality of patterned lights overlap or interfere with each other, and it is possible to accurately determine the predetermined pattern in the captured images. Therefore, the measurement accuracy of the three-dimensional shape of the measurement object W can be further improved.

In the present embodiment, the projectors P1 to P3 and the cameras C1 to C3 are respectively arranged in units (units U1 to U3). Accordingly, for example, every time another projector is added to a unit that includes one projector originally, it is not necessary to calibrate the geometric positional relationship (coordinate system) between the projector and the camera. Therefore, because the calibration process in the three-dimensional measurement apparatus 100 can be simplified, it is possible to prevent a decrease in operability and processing efficiency.

### 2. Configuration Example

### Hardware Configuration

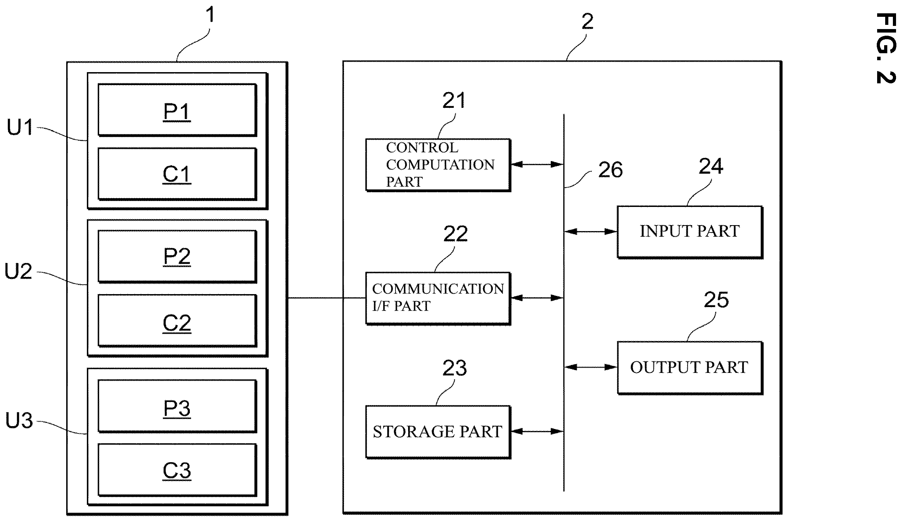

Next, an example of a hardware configuration of the three-dimensional measurement apparatus 100 according to the present embodiment will be described with reference to Fig. 2. Fig. 2 is a plan view schematically showing an example of a hardware configuration of the three-dimensional measurement apparatus 100.

Also in the examples of Fig. 2, the three-dimensional measurement apparatus 100 includes the light-projecting and image-capturing apparatus 1 including the units U1 to U3 shown in Fig. 1, and the control apparatus 2. The control apparatus 2 includes a control computation part 21, a communication interface (I/F) part 22, a storage part 23, an input part 24, and an output part 25, and these parts can be connected to each other via a bus line 26 to be capable of communicating with each other.

The control computation part 21 includes a CPU (Central Processing Unit), RAM (Random Access Memory), ROM (Read Only Memory), and the like, and controls the components and performs various computations according to information processing.

The communication I/F part 22 is, for example, a communication module for communicating with "parts" and "apparatuses", which are other components, in a wired or wireless manner. The communication method used by the communication I/F part 22 for communication can be freely selected. A LAN (Local Area Network), a USB (Universal Serial Bus), or the like may be used, and an appropriate communication line equivalent to the bus line 26 may also be used. The light-projecting and image-capturing apparatus 1 can communicate with the control computation part 21 and the like via the communication I/F part 22.

The storage part 23 is an auxiliary storage device such as a hard disk drive (HDD) or a solid state drive (SSD). The storage part 23 stores various programs executed by the control computation part 21 (computation programs for executing various processes, control programs for controlling the operations of the projectors P1 to P3 and the cameras C1 to C3 included in the units U1 to U3, and the like), a database including calibration conditions, measurement conditions, and image processing conditions (recognition parameters of the measurement object W and the like), captured images (measurement data) output from the light-projecting and image-capturing apparatus 1, data of the image processing result, three-dimensional model data of the measurement object W, and the like. The computational programs and the control programs stored in the storage part 23 are executed by the control computation part 21, whereby the various processing functions in a functional configuration example described later are realized.

The input part 24 is an interface device for receiving various input operations from a user who uses the three-dimensional measurement apparatus 100, and can be realized by, for example, a mouse, a keyboard, a touch panel, a voice microphone, or the like. The output part 25 is an interface device for notifying a user or the like who uses the three-dimensional measurement apparatus 100 of various types of information by display, audio output, print output, or the like, and can be realized by, for example, a display, a speaker, a printer, or the like.

### Functional Configuration

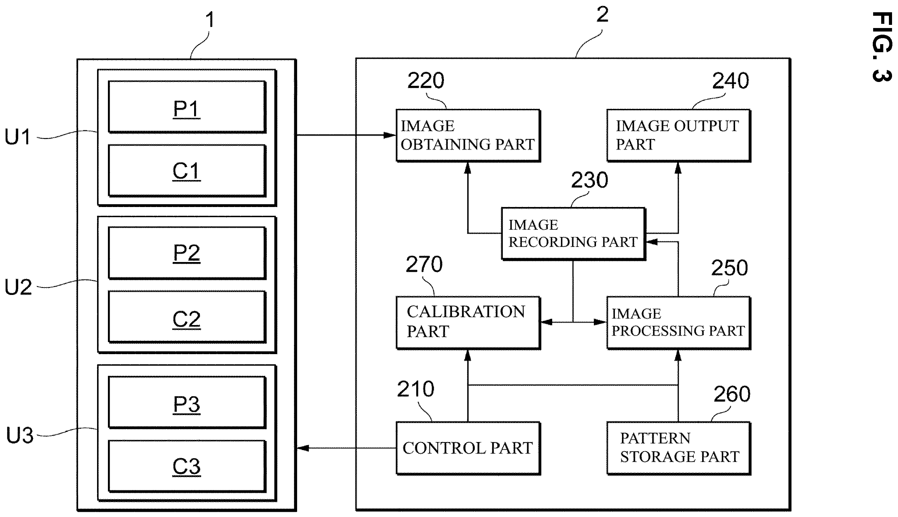

Next, an example of a functional configuration of the three-dimensional measurement apparatus 100 will be described with reference to Fig. 3. Fig. 3 is a plan view schematically showing an example of the functional configuration of the three-dimensional measurement apparatus 100 according to the embodiment.

The control computation part 21 of the three-dimensional measurement apparatus 100 shown in Fig. 2 loads various programs (control programs, computation programs, and the like) stored in the storage part 23 into the RAM. Then, the control computation part 21 controls the components by interpreting and executing various programs loaded in the RAM by the CPU. As a result, as shown in Fig. 3, the three-dimensional measurement apparatus 100 according to the present embodiment can realize a configuration including a control part 210, an image obtaining part 220, an image recording part 230, an image output part 240, an image processing part 250, a pattern storage part 260, and a calibration part 270.

In the present embodiment, an example has been described in which the functions implemented by the control apparatus 2 of the three-dimensional measurement apparatus 100 are implemented by a general-purpose CPU. However, some or all of the above functions may also be implemented by one or more dedicated processors. In the functional configuration of the control apparatus 2 of the three-dimensional measurement apparatus 100, omission, replacement, and addition of functions may also be appropriately performed according to the embodiment and the configuration example. Also, a "control apparatus" can be understood to be an ordinary information processing apparatus (a computer, a workstation, or the like, for example).

### 3. Operation Example

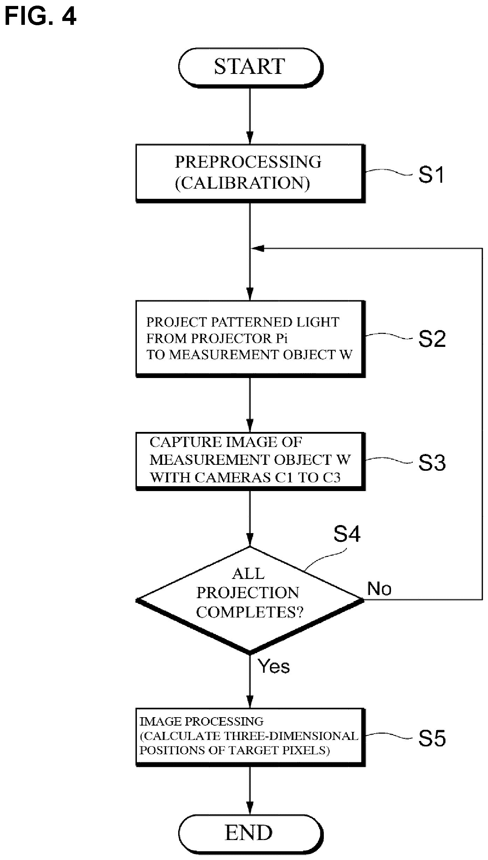

Next, an example of the operation of the three-dimensional measurement apparatus 100 will be described with reference to Fig. 4. Fig. 4 is a flowchart showing an example of a processing procedure in the three-dimensional measurement apparatus 100 according to the present embodiment, and is also a flowchart showing an example of a processing procedure in the three-dimensional measurement method using the three-dimensional measurement apparatus 100. The processing procedure described below is merely an example, and each processing may be changed to the extent possible within the scope of the technical idea of the present disclosure. Also, in the processing procedure described below, steps may be omitted, replaced, or added as appropriate according to the embodiment or the configuration example.

### Activation

First, the user of the three-dimensional measurement apparatus 100 activates the three-dimensional measurement apparatus 100, and executes various programs (such as computation programs and control programs). Then, according to the following processing procedure, the control computation part 21 in the control apparatus 2 controls the operations of the projectors P1 to P3 and the cameras C1 to C3 in the units U1 to U3 of the light-projecting and image-capturing apparatus 1, and performs computation processing by the functional parts in the control apparatus 2 and image processing of the captured images of the measurement object W.

In the present embodiment, prior to the processing in each of the following steps, the calibration conditions, the measurement conditions, and the image processing conditions necessary for each step are read from the storage part 23, and appropriately held in the control part 210, the image processing part 250, and the calibration part 270. The reading of the measurement conditions and various parameters can be performed at an appropriate timing before the processing of each step.

### Step S1

As described above, the geometric positional relationships between the projectors P1 to P3 and the cameras C1 to C3 in the respective units U1 to U3 are calibrated in advance prior to the operation of the three-dimensional measurement apparatus 100. On the other hand, the geometric positional relationship between the projector P1 of the unit U1 and the cameras C2 and C3 of the units U2 and U3, the geometric positional relationship between the projector P2 of the unit U2 and the cameras C1 and C3 of the units U1 and U3, the geometric positional relationship between the projector P3 of the unit U3 and the cameras C1 and C2 of the units U1 and U2 are not calibrated before the operation of the three-dimensional measurement apparatus 100. Accordingly, in step S1, any calibration that has not yet been performed is performed as preprocessing.

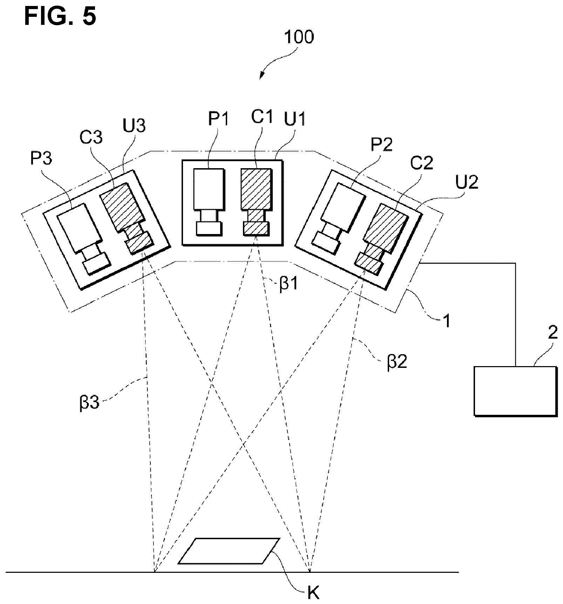

Fig. 5 is a plan view schematically showing an example of a state in which (one process in) calibration as preprocessing is performed in the three-dimensional measurement apparatus 100. In step S1, first, a predetermined calibration reference object K is arranged within the range of the image capturing areas β1 to β3 of the cameras C1 to C3. In this state, the control part 210 simultaneously or sequentially operates the cameras C1 to C3 of the units U1 to U3, and captures images of the calibration reference object K under the image capturing conditions in the set measurement conditions.

The cameras C1 to C3 output captured images of the calibration reference object K to the control apparatus 2, and image obtaining part 220 obtains and records the captured images in the image recording part 230. The calibration part 270 calculates three-dimensional positions of a plurality of feature points in the pattern of the calibration reference object K captured in each of the captured images of the calibration reference object K recorded in the image recording part 230, and calibrates the geometric positional relationship (image capturing coordinate system) between the cameras C1 to C3 based on the coordinates of the corresponding feature points between the captured images.

The calibration part 270 calibrates the geometric positional relationship between the projector Pi (i=1 to 3, the same applies hereinafter) in the Unit Ui and the camera Cj (j=1 to 3, where j≠i, the same applies hereinafter) in another unit Uj by using the known geometric positional relationship between the projector Pi and the camera Ci in the unit Ui that has been calibrated in advance and the geometric positional relationship between the cameras C1 to C3 that are calibrated from the captured images of the calibration reference object K. As a result, the geometric positional relationships between all the projectors P1 to P3 and all the cameras C1 to C3 are calibrated and known. Also, the calibration part 270 calculates and holds, as a calibration result, for example, the relationship between the relative three-dimensional coordinates (x, y, z) and the rotational angles (rx, ry, rz) about the three-dimensional axes of the projectors P1 to P3 and the cameras C1 to C3.

### Step S2

Prior to step S2, the measurement object W is arranged within the range of the projection areas α1 to α2 of the projectors P1 to P3 and within the range of the image capturing areas β1 to β3 of the cameras C1 to C3. In step S2, in this state, the control part 210 operates the projector Pi (where i is any one of 1 to 3, the same applies hereinafter) of the unit Ui to project a predetermined patterned light onto the measurement object W under the projection conditions in the set measurement conditions.

### Step S3

In step S3, in a state in which the predetermined patterned light is projected from the projector Pi onto the measurement object W, the control part 210 simultaneously or sequentially operates all the cameras C1 to C3 of all the units U1 to U3, and captures images of the measurement object W under the image capturing conditions in the set measurement conditions. The cameras C1 to C3 output captured images of the measurement object W to the control apparatus 2, and image obtaining part 220 obtains and records the captured image data in the image recording part 230.

### Step S4

In step S4, the control part 210 determines whether or not the projection of all the patterned lights from the projectors P1 to P3 is completed. If the projection of all the patterned lights from the projectors P1 to P3 is not completed (No in step S4), steps S2 and S3 are repeated, and the projection of the patterned light from the projector Pi in which the projection of the patterned light is not completed and the image capturing by all the cameras C1 to C3 of all the units U1 to U3 in a state where the individual projection is performed are performed. If the projection of all the patterned lights from the projectors P1 to P3 is completed (Yes in step S4), the process proceeds to step S5. As described above, steps S2 and S3 correspond to an example of the "light-projecting and image-capturing step" in the present invention.

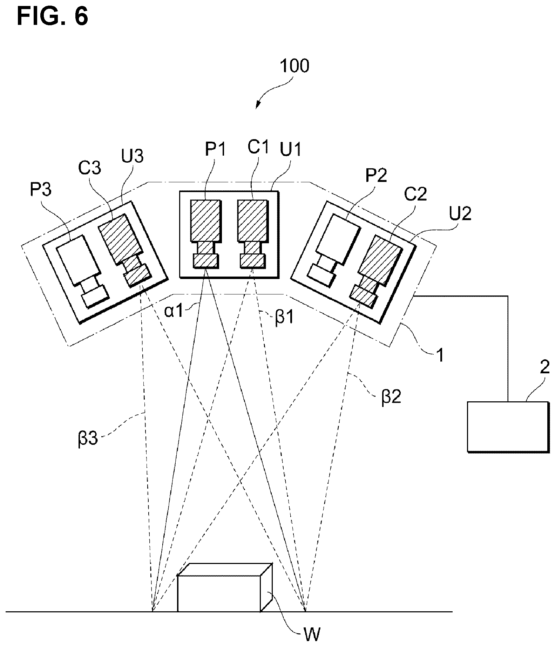

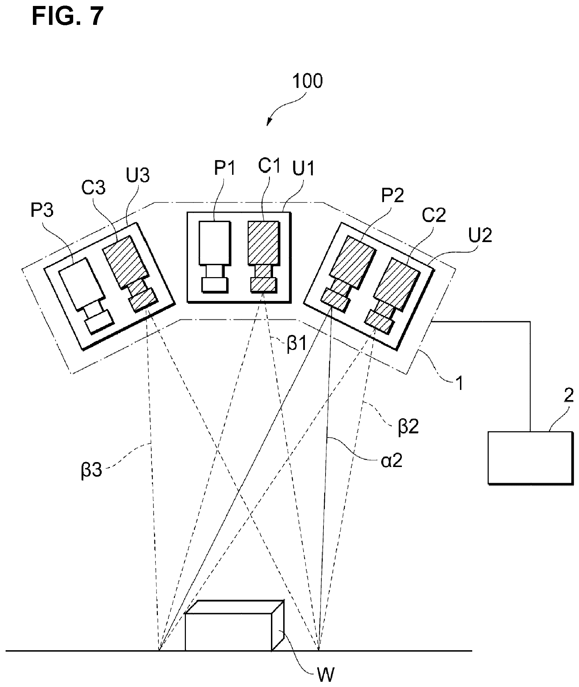

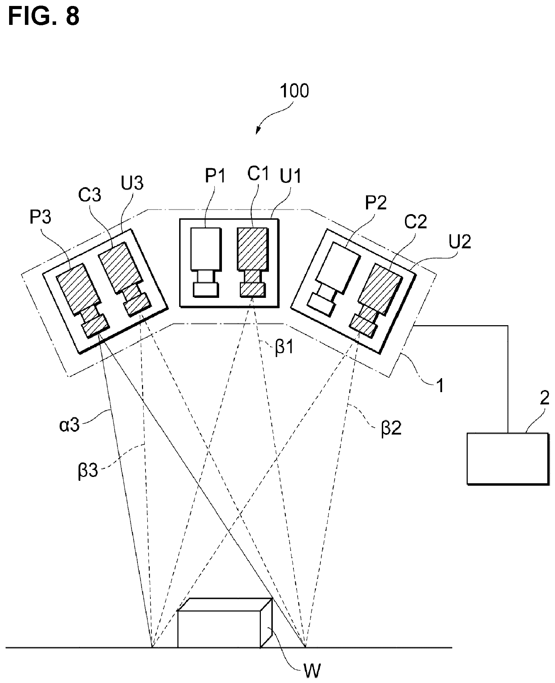

Figs. 6 to 8 are plan views schematically showing examples of a state (step S2 and S3) in which projection of the patterned lights onto the measurement object W and capturing images of the measurement object W by the three-dimensional measurement apparatus 100. Also, Figs. 6 to 8 respectively show a state in which image capturing is performed by the cameras C1 to C3 in a state where the patterned light is projected onto the measurement object W by individually operating the projectors P1 to P3. In Figs. 6 to 8, the projector Pi and the cameras C1 to C3 indicated by hatching are operated, and the projectors Pi not indicated by hatching are not operated.

### Step S5

In step S5, the image processing part 250 selects a plurality of target pixels in the captured images of the measurement object W recorded in the image recording part 230. The image processing part 250 compares (matches) the predetermined pattern in each captured image with the predetermined pattern in the patterned lights stored in the pattern storage part 260. Then, the image processing part 250 calculates the three-dimensional positions of the target pixels using the calibration results of the geometric positional relationships between the projectors P1 to P3 and the cameras C1 to C3 that are held in the calibration part 270. After calculating the three-dimensional positions of all the target pixels in each captured image, the image processing part 250 generates three-dimensional point group data in the captured images. Furthermore, the image processing part 250 performs refinement processing by appropriately combining (integrating) the plurality of pieces of three-dimensional point group data obtained for the plurality of captured images, and specifies the three-dimensional shape of the measurement object W from the finally obtained three-dimensional point group data.

As described above, the image processing part 250 corresponds to an example of a "calculation part" in the present invention, and step S5 corresponds to an example of a "calculation step" in the present invention. Also, storing the predetermined pattern in the pattern storage part 260 corresponds to an example of a "storage step" in the present invention.

The three-dimensional point group data generated from the captured images and the finally refined three-dimensional point group data are recorded in the image recording part 230 together with the captured images. Then, the image output part 240 outputs, as necessary, a three-dimensional point group image or the like indicating the three-dimensional shape of the measurement object W to the display, a printer, or the like so that the user of the three-dimensional measurement apparatus 100 can visually recognize the three-dimensional point group image or the like.

### 4. Operation and Effects

With the three-dimensional measurement apparatus 100 according to the present embodiment and an example of the three-dimensional measurement method using the three-dimensional measurement apparatus 100, the patterned lights are individually projected onto the measurement object W from the projectors P1 to P3 in the respective units U1 to U3, and images of the measurement object W are captured by all the cameras C1 to C3 of all the units U1 to U3 in the projection state of each patterned light. In this manner, a total of nine (corresponding to the second power of the number of the units U1 to U3), namely the number (three) of the projectors P1 to P3 × the number (three) of the cameras C1 to C3 can be obtained. These captured images include images obtained by capturing the measurement object W onto which patterned lights are projected from different projection directions, and images obtained by capturing the measurement object W from the different image capturing directions.

By calculating the three-dimensional positions of the target pixels in each of the obtained plurality of captured images, a plurality of pieces of three-dimensional point group data corresponding to the plurality of captured images can be generated. Accordingly, the amount of information on the three-dimensional shape of the measurement object W can be increased. As a result, the reliability of the three-dimensional position of each target pixel is improved, and the robustness (prevention of halation and the like) with respect to the surface shape of the measurement object W and mutual reflection can also be improved. Therefore, the measurement accuracy of the three-dimensional shape of the measurement object W can be improved. Furthermore, by combining and refining the plurality of pieces of obtained three-dimensional point group data and specifying the three-dimensional shape of the measurement object W based on the finally optimized three-dimensional point group data, the measurement accuracy of the three-dimensional shape of measurement object W can be further improved.

In addition, because the patterned lights from the projectors P1 to P3 are not projected onto the measurement object W at the same time (at one time), and images of the measurement object W in a state in which respective patterned lights are individually projected are captured by the plurality of cameras C1 to C3, there is no concern that the plurality of patterned lights overlap or interface with each other. Therefore, the predetermined pattern in the captured image can be accurately determined, and the measurement accuracy of the three-dimensional shape of the measurement object W can be further improved.

Furthermore, because the projectors P1 to P3 and the cameras C1 to C3 are used as the units U1 to U3, it is not necessary to calibrate the geometric positional relationships (coordinate systems) between the projectors and the cameras every time another projector is added to one projector. As a result, the calibration process can be simplified and an increase in the number of steps can be suppressed. Therefore, it is possible to prevent a decrease in operability and processing efficiency.

If images of the measurement object W onto which the patterned lights are projected from the projectors P1 to P3 are captured by the cameras C1 to C3 at the same time, the projection and image capturing time can be shortened compared to a case where images of the measurement object W are sequentially captured by the cameras C1 to C3. As a result, the processing efficiency can be improved.

Furthermore, in the three-dimensional measurement of the measurement object W, the geometric positional relationships between the projectors P1 to P3 and the cameras C1 to C3 of the units U1 to U3 are calibrated. Accordingly, appropriate three-dimensional measurement can be performed not only when the units U1 to U3 in which the geometric positional relationship between the projector Pi and the camera Ci is known is used in combination, but also when the relative arrangement of the units U1 to U3 is changed as appropriate. As a result, the versatility of the apparatus configuration and the three-dimensional measurement can be increased.

Furthermore, the geometric positional relationships between the projectors P1 to P3 and the cameras C1 to C3 of the units U1 to U3 are calibrated based on the geometric positional relationships between the cameras C1 to C3 that are calibrated using the calibration reference object K and the known geometric positional relationship between the projector Pi and the camera Ci of the unit Ui. Therefore, the calibration process can be easily and reliably performed.

### 5. Modifications

An exemplary embodiment of the present disclosure has been described in detail above. The foregoing description is in all aspects only illustrative of the present disclosure, and various modifications and changes may be made without departing from the scope of the present disclosure. The following modifications are possible, for example. In the following description, the same components as those of the above embodiment are denoted by the same reference numerals, and the description of the same points as those of the above embodiment is appropriately omitted. In addition, the above-described embodiment and the following modifications can be combined as appropriate.

### 5.1 First Modification

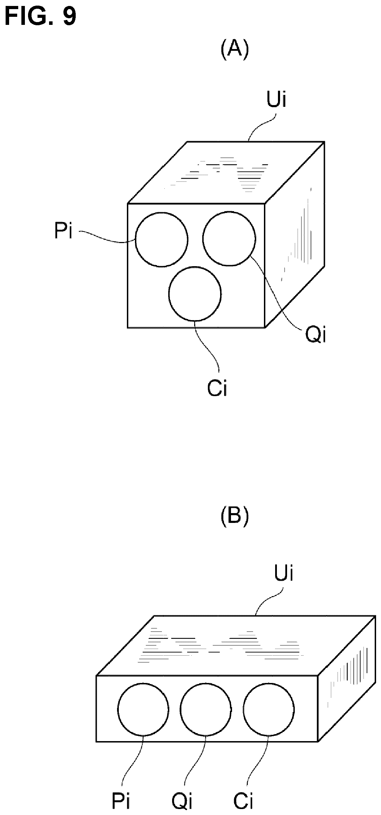

Figs. 9 (A) and (B) are perspective views schematically showing a first configuration example and a second configuration example of a unit Ui according to a first modification. The first configuration example and the second configuration example are examples in which a projector Qi is added to the unit Ui (the unit U1, for example) of any of units U1 to U3 in the three-dimensional measurement apparatus 100. The projector Qi is a 2D illumination apparatus for projecting normal illumination light onto the measurement object W. The projector Qi corresponds to an example of a "projecting part" in the present invention.

In both the first configuration example and the second configuration example, the projector Qi can be used as ordinary illumination for inspection, for example. Accordingly, even when the measurement object W is in a dark surrounding environment, three-dimensional measurement can be suitably performed. By projecting the normal illumination light not only when images of the measurement object W are captured but also when images of the calibration reference object K are captured, similarly, for example, even when the calibration reference object K is in a dark surrounding environment, the image capturing can be suitably performed.

In addition, by comparing the captured images of the measurement object W onto which the normal illumination is projected from the projector Qi with, for example, shape design data (CAD model data) of the measurement object W that is stored in advance in the storage part 23 of the control apparatus 2 and performing, for example, so-called CAD matching, it is possible to more accurately grasp the three-dimensional shape of the measurement object W.

Furthermore, in the first configuration example, the outer shape of the unit Ui may be a shape close to a square or an equilateral triangle. Accordingly, even when the projector Qi is additionally provided, the footprint of the unit Ui can be made relatively small, and the installation area of the three-dimensional measurement apparatus can be reduced. On the other hand, in the second configuration example, the distance between the projector Pi and the camera Ci can be made larger than that in the case where the projector Qi is not provided (Fig. 1 and the like). Accordingly, the accuracy of the three-dimensional measurement by the active one-shot method in the Unit Ui can be improved.

### 5.2 Second Modification

A plurality of cameras Ci may also be included in the unit Ui. The number of units Ui is not limited to three, and two or four or more units may also be provided. In this case, the projection processing and the image capturing processing in steps S2 and S3 can be performed by the number of projectors Pi.

### 5.3 Third Modification

In the above embodiment, the image processing is performed after the projection and image capturing of all the patterned lights are completed. However, the three-dimensional point group data may also be generated by performing image processing on the captured image every time the projection of the patterned light and the image capturing are finished. Alternatively, after the projection and image capturing of all the patterned lights are completed, the refinement process may be performed by combining a plurality of pieces of three-dimensional point group data obtained at that time.

### 5.4 Fourth Modification

In the above-described embodiment, the calibration process between the cameras C1 to C3 is performed by capturing an image of the installed calibration reference object K. However, a pattern obtained by projecting a pattern equivalent to that of the calibration reference object K from the projector Pi may also be used as the calibration reference object K, and the calibration process between the cameras C1 to C3 may also be performed using a captured image of the projected pattern.

### 6. Additional Remarks

The embodiment and modifications described above are intended to facilitate understanding of the present invention, and are not intended to be interpreted as limiting the present invention. The elements included in the embodiment and the modifications and the arrangement, the material, the condition, the shape, the size, and the like thereof are not limited to those illustrated, and can be changed as appropriate. Also, it is possible to partially replace or combine the configurations shown in the different embodiments and the modifications.

### Additional Remark 1

A three-dimensional measurement apparatus (100) configured to measure a three-dimensional shape of a measurement object (W), the three-dimensional measurement apparatus (100) including:
a light-projecting and image-capturing part (1) including at least a first unit (U1) and a second unit (U2)
   the first unit (U1) including a first light projection part (P1) configured to project a first patterned light including a predetermined pattern from a first projection direction onto the measurement object (W) and a first image capturing part (C1) configured to capture an image of the measurement object (W) from a first image capturing direction, and
   the second unit (U2) including a second light projection part (P2) configured to project a second patterned light including the predetermined pattern from a second projection direction onto the measurement object (W) and a second image capturing part (C2) configured to capture an image of the measurement object (W) from a second image capturing direction;
a pattern storage part (260) configured to store the predetermined pattern; and
a calculation part (250) configured to select target pixels from the captured images of the measurement object (W) and calculate three-dimensional positions of the target pixels based on a predetermined pattern in the captured images and the predetermined pattern that is stored in the pattern storage part (260),
wherein the light-projecting and image-capturing part (1) projects the first patterned light and the second patterned light individually onto the measurement object (W), and captures images of the measurement object (W), onto which the first patterned light and the second patterned light are individually projected, with the first image capturing part (C1) and the second image capturing part (C2).

### Additional Remark 2

The three-dimensional measurement apparatus (100) according to Additional Remark 1,
wherein the light-projecting and image-capturing part (1) simultaneously captures images of the measurement object (W), onto which the first patterned light is projected, with the first image capturing part (C1) and the second image capturing part (C2), and simultaneously captures images of the measurement object (W), onto which the second patterned light is projected, with the first image capturing part (C1) and the second image capturing part (C2).

### Additional Remark 3

The three-dimensional measurement apparatus (100) according to Additional Remark 1 or 2,
wherein the calculation part (250) generates a plurality of pieces of three-dimensional point group data representing the three-dimensional positions of the target pixels in each of the plurality of images captured by the first image capturing part (C1) and the second image capturing part (C2), and combines and refines the generated plurality of pieces of three-dimensional point group data.

### Additional Remark 4

The three-dimensional measurement apparatus (100) according to any one of Additional Remarks 1 to 3,
wherein a geometric positional relationship between the first light projection part (P1) and the first image capturing part (C1) and a geometric positional relationship between the second light projection part (P2) and the second image capturing part (C2) are calibrated in advance.

### Additional Remark 5

The three-dimensional measurement apparatus (100) according to any one of Additional Remarks 1 to 4, further including:
a calibration part (270) configured to calibrate a geometric positional relationship between the first light projection part (P1) and the second image capturing part (C2) and a geometric positional relationship between the second light projection part (P2) and the first image capturing part (C1).

### Additional Remark 6

The three-dimensional measurement apparatus (100) according to Additional Remark 5, wherein:
the first image capturing part (C1) and the second image capturing part (C2) capture images of a predetermined calibration reference object (K), and
the calibration part (270) calibrates a geometric positional relationship between the first image capturing part (C1) and the second image capturing part (C2) based on the captured images of the predetermined calibration reference object (K), and calibrates the geometric positional relationship between the first light projection part (P1) and the second image capturing part (C2) and the geometric positional relationship between the second light projection part (P2) and the first image capturing part (C1) based on the calibrated geometric positional relationship between the first image capturing part (C1) and the second image capturing part (C2), and the geometric positional relationship, which has been calibrated in advance, between the first light projection part (P1) and the first image capturing part (C1) and the geometric positional relationship, which has been calibrated in advance, between the second light projection part (P2) and the second image capturing part (C2).

### Additional Remark 7

The three-dimensional measurement apparatus (100) according to any one of Additional Remarks 1 to 6, further including:
a projecting part (Qi) configured to project a normal illumination light, which is different from the first patterned light and the second patterned light, onto the measurement object.

### Additional Remark 8

The three-dimensional measurement apparatus (100) according to Additional Remark 6 or 7, further including:
a projecting part (Qi) configured to project a normal illumination light, which is different from the first patterned light and the second patterned light, onto the predetermined calibration reference object.

### Additional Remark 9

A three-dimensional measurement method for measuring a three-dimensional shape of a measurement object (W) using a three-dimensional measurement apparatus (100) including: a light-projecting and image-capturing part (1) that includes at least a first unit (U1) including a first light projection part (P1) and a first image capturing part (C1) and a second unit (U2) including a second light projection part (P2) and a second image capturing part (C2); a pattern storage part (260); and a calculation part (250), the method including:
a light-projecting and image-capturing step including at least a step of the first light projection part (P1) projecting a first patterned light including a predetermined pattern from a first projection direction onto the measurement object (W), a step of the second light projection part (P2) projecting a second patterned light including the predetermined pattern from a second projection direction onto the measurement object (W), a step of the first image capturing part (C1) capturing an image of the measurement object (W) from a first image capturing direction, and a step of the second image capturing part (C2) capturing an image of the measurement object (W) from a second image capturing direction;
a storage step of the pattern storage part (260) storing the predetermined pattern; and
a calculation step of the calculation part (250) selecting target pixels from the captured images of the measurement object (W) and calculating three-dimensional positions of the target pixels based on a predetermined pattern in the captured images and the predetermined pattern stored in the pattern storage part (260),
wherein, in the light-projecting and image-capturing step, the first patterned light and the second patterned light are individually projected onto the measurement object (W), images of the measurement object (W), onto which the first patterned light and the second patterned light are individually projected, are captured by the first image capturing part (C1) and the second image capturing part (C2).

Note, that the configuration of Additional Remark 1 can be paraphrased as follows, for example.

### Additional Remark 10

A three-dimensional measurement apparatus (100) configured to measure a three-dimensional shape of a measurement object (W), the three-dimensional measurement apparatus (100) including:
a light-projecting and image-capturing part (1) including a plurality of units (Ui) that includes respective light projection parts (Pi), each of which is configured to project a patterned light including a predetermined pattern onto the measurement object (W), from projection directions different from each other, and respective image capturing parts (Ci) configured to capture images of the measurement object (W) from image capturing directions different from each other;
a pattern storage part (260) configured to store the predetermined pattern; and
a calculation part (250) configured to select target pixels from the captured images of the measurement object (W) and calculates three-dimensional positions of the target pixels based on a predetermined pattern in the captured images and the predetermined pattern that is stored in the pattern storage part (260),
wherein the light-projecting and image-capturing part (1) projects the plurality of patterned lights individually onto the measurement object (W), and captures images of the measurement object (W), onto which the patterned lights are projected, with the plurality of image capturing parts (Ci).

### INDEX TO THE REFERENCE NUMERALS

1: Light-projecting and image-capturing apparatus; 2: Control apparatus; 21: Control computation part; 22: Communication interface (I/F) part; 23: Storage part; 24: Input part; 25: Output part; 26: Bus line; 100: Three-dimensional measurement apparatus; 210: Control part; 220: Image obtaining part; 230: Image recording part; 240: Image output part; 250: Image processing part; 260: Pattern storage part; 270: Calibration part; C1 to C3: Camera; K: Calibration reference object; P1 to P3: Projector; Pi: Projector; Qi: Projector; S1 to S5: Step; U1 to U3: Unit; W: Measurement object; α1 to α3: Projection area; β1 to β3: Image capturing area

## Claims

1. A three-dimensional measurement apparatus configured to measure a three-dimensional shape of a measurement object, the three-dimensional measurement apparatus comprising:
a light-projecting and image-capturing part including at least a first unit and a second unit,
the first unit including a first light projection part configured to project a first patterned light including a predetermined pattern from a first projection direction onto the measurement object and a first image capturing part configured to capture an image of the measurement object (W) from a first image capturing direction, and
the second unit including a second light projection part configured to project a second patterned light including the predetermined pattern from a second projection direction onto the measurement object and a second image capturing part configured to capture an image of the measurement object from a second image capturing direction;
a pattern storage part configured to store the predetermined pattern; and
a calculation part configured to select target pixels from the captured images of the measurement object and calculate three-dimensional positions of the target pixels based on a predetermined pattern in the captured images and the predetermined pattern that is stored in the pattern storage par,
wherein the light-projecting and image-capturing part projects the first patterned light and the second patterned light individually onto the measurement object, and captures images of the measurement object, onto which the first patterned light and the second patterned light are individually projected, with the first image capturing part and the second image capturing part.

2. The three-dimensional measurement apparatus according to claim 1,
wherein the light-projecting and image-capturing part simultaneously captures images of the measurement object, onto which the first patterned light is projected, with the first image capturing part and the second image capturing part, and simultaneously captures images of the measurement object, onto which the second patterned light is projected, with the first image capturing part and the second image capturing part.

3. The three-dimensional measurement apparatus according to claim 1 or 2,
wherein the calculation part generates a plurality of pieces of three-dimensional point group data representing the three-dimensional positions of the target pixels in each of the plurality of images captured by the first image capturing part and the second image capturing part, and combines and refines the generated plurality of pieces of three-dimensional point group data.

4. The three-dimensional measurement apparatus according to any one of claims 1 to 3,
wherein a geometric positional relationship between the first light projection part and the first image capturing part and a geometric positional relationship between the second light projection part and the second image capturing part are calibrated in advance.

5. The three-dimensional measurement apparatus according to any one of claims 1 to 4, further comprising:
a calibration part configured to calibrate a geometric positional relationship between the first light projection part and the second image capturing part and a geometric positional relationship between the second light projection part and the first image capturing part.

6. The three-dimensional measurement apparatus according to claim 5, wherein:
the first image capturing part and the second image capturing part capture images of a predetermined calibration reference object, and
the calibration part calibrates a geometric positional relationship between the first image capturing part and the second image capturing part based on the captured images of the predetermined calibration reference object, and calibrates the geometric positional relationship between the first light projection part and the second image capturing part and the geometric positional relationship between the second light projection part and the first image capturing part based on the calibrated geometric positional relationship between the first image capturing part and the second image capturing part, and the geometric positional relationship, which has been calibrated in advance, between the first light projection part and the first image capturing part and the geometric positional relationship, which has been calibrated in advance, between the second light projection part and the second image capturing part.

7. The three-dimensional measurement apparatus according to any one of claims 1 to 6, further comprising:
a projecting part configured to project a normal illumination light, which is different from the first patterned light and the second patterned light, onto the measurement object.

8. The three-dimensional measurement apparatus according to claim 6 or 7, further comprising:
a projecting part configured to project a normal illumination light, which is different from the first patterned light and the second patterned light, onto the predetermined calibration reference object.

9. A three-dimensional measurement method for measuring a three-dimensional shape of a measurement object using a three-dimensional measurement apparatus including: a light-projecting and image-capturing part that includes at least a first unit including a first light projection part and a first image capturing part and a second unit including a second light projection part and a second image capturing part; a pattern storage part; and a calculation part, the method comprising:
a light-projecting and image-capturing step including at least a step of the first light projection part projecting a first patterned light including a predetermined pattern from a first projection direction onto the measurement object, a step of the second light projection part projecting a second patterned light including the predetermined pattern from a second projection direction onto the measurement object, a step of the first image capturing part capturing an image of the measurement object from a first image capturing direction, and a step of the second image capturing part capturing an image of the measurement object from a second image capturing direction;
a storage step of the pattern storage part storing the predetermined pattern; and
a calculation step of the calculation part selecting target pixels from the captured images of the measurement object and calculating three-dimensional positions of the target pixels based on a predetermined pattern in the captured images and the predetermined pattern stored in the pattern storage part,
wherein, in the light-projecting and image-capturing step, the first patterned light and the second patterned light are individually projected onto the measurement object, and images of the measurement object, onto which the first patterned light and the second patterned light are individually projected, are captured by the first image capturing part and the second image capturing part.
